# EUROPEAN PATENT SPECIFICATION

(11) **EP 1 246 537 B1**
(45) Date of publication and mention of the grant of the patent: **14.12.2005**
(21) Application number: 00981593.7
(22) Date of filing: 17.12.2000
(51) Int. Cl.: A22C 25/02

(54) **METHOD FOR SCALING FRESH FISH AND REMOVING ITS INTERNAL ORGANS AND DEVICE FOR IMPLEMENTATION OF THE OFFERED METHOD**
VERFAHREN ZUM ABSCHUPPEN VON FRISCHFISCHEN UND ZUM ENTFERNEN VON INNEREN ORGANEN UND VORRICHTUNG ZUR DURCHFÜHRUNG DES VERFAHRENS
PROCEDE D'ECAILLAGE DE POISSON FRAIS ET DE RETRAIT DES ORGANES INTERNES DU POISSON ET DISPOSITIF DE MISE EN OEUVRE DUDIT PROCEDE

(30) Priority: 13.01.2000 US 175961 P; 19.09.2000 US 665320
(43) Date of publication of application: 09.10.2002
(73) Proprietor: Jersey Global International S.A., 1050 Brussels (BE)
(72) Inventor: PURETZ, Avrohom, Jerusalem (IL)
(74) Representative: Howden, Christopher A.
(86) International application number: PCT/IL2000/000840
(87) International publication number: WO 2001/050871

(56) References cited:
- WO-A-95/18536
- DD-A- 219 375
- US-A- 2 172 471
- US-A- 2 993 227
- US-A- 4 091 506
- US-A- 4 815 167
- US-A- 4 976 010
- US-A- 5 413 524
- US-A- 5 628 680

## Description

### Field of the invention

The proposed invention is pertinent to the technology and equipment for the treatment of fresh fish and can be applied for example in various branches of fish industry, in marketing, in public catering etc.

### Background of the invention

To the present day a technology and, consequently, a machine is not available that would allow to combine together the process of high-quality scaling of fish and the process of removing its internal organs, to bring these processes together in time, and thus create possibility of combining these two usually separate operations into a single one, which could substantially improve consumer qualities of goods.

The present invention offers a new method for fish scaling and removal of internal organs, as well as a machine for its implementation and its main object is elimination of the above-indicated deficiency.

There are known in the art various methods and devices for fish scaling and for the removal of internal organs. However these methods and devices are mostly devised to perform the above operations in separate and on separate machines and by different methods.

For example, it is well known to use for scaling the brushes made from various materials and rotating at different angles to the fish surface (USA patents Nos. 5197916, 5184973. This method can be implemented with relative success for scaling frozen fish. When, however it is required to scale fresh fish, this method can damage the skin. Furthermore it can damage thin and fine tissues of abdominal cavity and rupture or badly traumatize internal organs. All this is associated with worsening the gustatory properties.

Therefore, for scaling fresh fish the above method is not suitable if it is required to preserve gustatory properties.

In order to improve the fish scaling quality, a method of scaling has been devised in which a compressed air jet is employed. This method is disclosed in Japanese patent No. JP6339336. Unfortunately this method is only of limited use, because it requires powerful compressors, which employs the most expensive type of energy i.e. compressed air and therefore this method is unavoidably is expensive.

There are known other inventions offering to use water jets under high pressure for scaling fish.

So, for example. Japanese patent No.4228023 offers to remove scale by means of water jets supplied through elongated rectilinear slits with their length exceeding the maximum width of the treated fish. In order to maintain gustatory properties the patent suggests removing entrails in advance, on a separate machine, since the existing methods and devices for a conveyer transportation of fish in the course of scaling do not provide for safety of fish internal organs. Thus in order to carry out the scaling properly more than one operation and more than one machine is required.

Nevertheless the method and device disclosed in this Japanese patent No.4228023 applying water jets under high pressure as a tool for scaling is the closest to our invention, since it can offer the highest quality of treatment. However, the method disclosed in Japanese '023 patent indicated above does not use all the advantages of the fish scaling by water jets. For example, this method employs such a sequence of operations, which does not provide for a satisfactory quality of scaling.

Firstly, the Japanese device anticipates removing entrails prior to scaling. In this case it is practically impossible the clean the cut fish belly with a water jet, due to loss of elasticity and resistivity of the body tissue.

Secondly, the elongated rectilinear nozzle shape employed in this method also will not provide for scaling quality because various parts of the fish body require dissimilar modes of operation with water jets (different angles of jet inclination, different distances from the nozzle to the surface to be treated etc.).

Under the conditions when a jet supplied from a single nozzle treats the entire fish width, it is not possible to provide for a reliable and high-quality scaling of all portions of the fish body.

Thirdly, the method of fixation and transportation the fish in the course of treatment as suggested in the '023 patent does not allow to protect the fish belly from being squeezed by the transportation elements and thus cannot guarantee preserving of gustatory properties. Therefore the method disclosed in '023 patent would be unavoidably forced to offer to scale the entrails separately.

But not only '023 patent fails to suggest satisfactory method of fixation and transportation of the fish. Not even one out of the considered patents solves this problem.

Basically, the fish is secured and moved either flat wise (patents of USA Nos. 5628680, 5197916, patents of Japan JP 4228023, JP 4837898) or on its back, with belly upwards (patents of USA Nos. 4091506, 4837898). Since the width of the transportation mechanism is kept constant and is not designed to accommodate the fish width, it might happen that the fish belly is over squeezed during transportation.

For example, if the fish is moving flat wise, then in case there is some fish of small width, the holding and transportation elements over squeeze the belly. This is associated with damaging or destroying those entrails and deteriorating the gustatory properties.

The same happens in those cases when the fish is held and transported with its belly up and is based on its back.

Thus, despite there are known methods and devices for fish scaling, which employ high-pressure water jets, nevertheless they have very essential drawbacks noted above. Consequently, we can draw the conclusion that for the time being no method or machine are available where the fish scaling and removal of its entrails could be performed together, in a single operation, using water jets and without deteriorating the gustatory properties.

Since no method of reliable, qualitative and efficient fish scaling is known, the removal of the viscera is performed on separate machines and devices, and very often it is carried out in combination with using high pressure water jets (patents of USA Nos. 4837898, 4535509, WO 9812929). This separate operation is performed prior to the fish scaling and very often they are even left to be done by the customer.

### Objects and summary of the invention

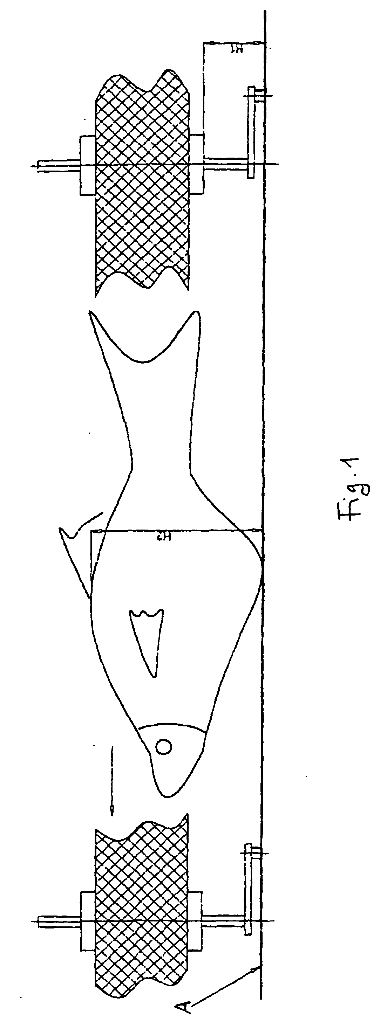

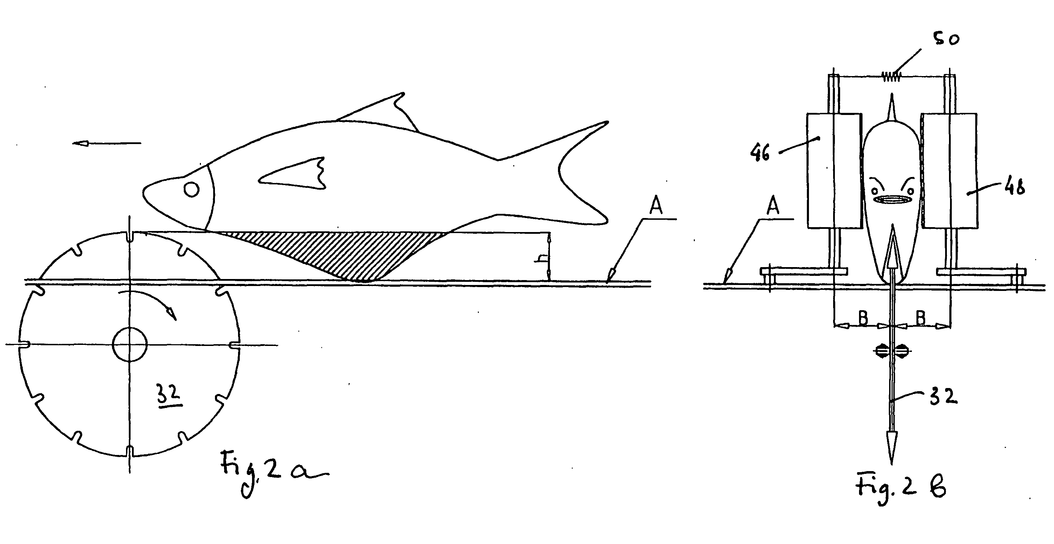

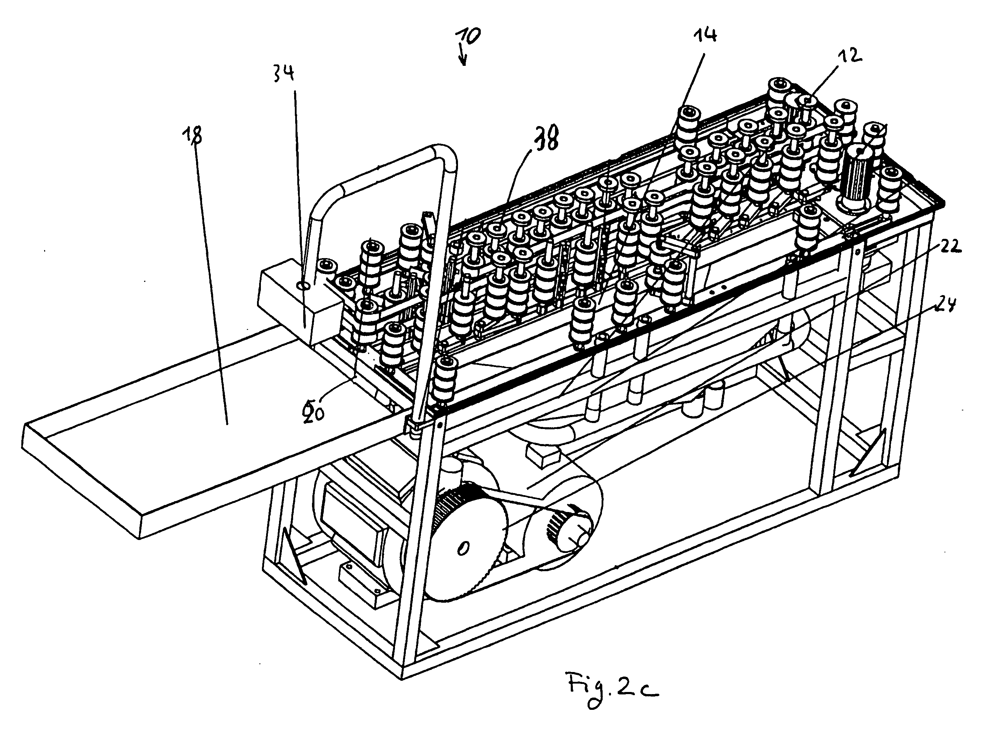

The offered method of scaling fresh fish by means of the high pressure water jets is free from the above listed drawbacks, and allows to create a high-quality treatment technology and machine for fish scaling and entrails removal. Distinctive features and essence of the proposed method comprise the following:
a) Fish scaling and removal of internal organs from abdominal cavity using high-pressure water jets is performed by positioning the fish vertically, with the belly downwards. The forces, required for holding and transporting the fish are applied strictly to the upper part of fish body, which is harder, without however touching the belly area, which is soft and therefore is left free. The above approach is implemented as follows: prior to the treatment the fish is positioned vertically and the lower surface of its belly is put on some reference plane A (see Fig.1). The means for fixation the fish and its transportation are located at some distance H1 above the reference plane. This distance is selected to ensure, that even the belly area of the fish having maximum width (H2=max.) would not touch the fixation means. In this case this condition is also met for smaller fish. Positioning of the fish as explained above allows to avoid traumatizing the viscera during scaling and thus to preserve the gustatory properties irrespective of the fish size.
b) The most rational sequence of steps is offered: in the beginning, the whole fish surface is scaled and only then the belly is cut and its internal organs are removed including kidneys (the so called "blood spots"). By virtue of this sequence of steps, the quality of the abdomen cavity scaling is improved as compared with the known methods when the fish is supplied for scaling in disemboweled condition. Since after disembowelment, the belly tissues lose elastic properties this area practically is not susceptible to scaling.
c) The scaling is done throughout the whole width of the fish in sequence, by separate zones (selectively). This distinctive feature of the method takes into consideration the fact that various zones of the fish surface have different size of scale and is defined by different adhesion of the scales to skin. Therefore the offered method provides for the treatment of various sections of the fish surface by means of directing the water jet through the nozzles located at different inclinations to the fish body surface and residing at various distances from the treated surface sections. The geometry of the nozzle is selected to provide for a flat fan-shaped jet. By virtue of this provision, the quality of fish scaling substantially improves in comparison with the known in the art methods.
d) After scaling, the fish is advanced to the position for removing viscera. The fish is positioned here in such a way, that the longitudinal plane of the fish body is aligned with the cutting disc (see Fig.2a). The upper part of the cutting disc always protrudes at a preset distance h from base surface A of the transportation system (Fig. 2a,b). By virtue of the above described positioning procedure, which is carried out before removing viscera the cleaning quality is significantly improved since the cutting disc is set up with respect to the fish body to cut the required part of the body irrespective of the body thickness. The disc is set up in such a manner, that on the one hand, under no circumstances the cutting edge should damage those fish organs which could cause change the gustatory properties and, on the other hand, would provide the mandatory cutting of the fish anus where a part of the viscera is held. Besides, the cleaning quality of the internal abdominal cavity is even more improved since cutting with the belly being downwards facilitates removal of the entrails, which easily fall down due to gravitation force. The quality of washing of the abdominal cavity is improved, since the probability for retention of removed organs and dirty liquid in the internal cavity significantly decreases.

On the basis of the above explained distinctive features and advantages a new method for scaling fresh fish and removing its internal organs as well a machine for its implementation are offered.

### Brief description of the drawings

The present invention will now be described in detail with references to the drawings.
Fig.1. Schematic representation explaining positioning of fish to be cleaned according to the present invention.
Fig.2a, b. Schematic representation explaining displacement of fish in the position of cutting the belly.
Fig. 2c. Isometric representation of the proposed apparatus for the fish scaling and removal of internal organs.
Fig.3a, b. Side and front views of the device represented in Fig.2c.
Fig.4a. Partial enlarged side view of treatment path for the fish scaling.
Fig.4b. Schematic top view of the treatment path for the fish scaling.
Fig.4c. Cross-Sectional views of positions I, II,III,IV of Fig.4b.
Fig.4d. Representation of the nozzle for supplying water jet to be used in the proposed apparatus.
Fig.4e. Side view of the area for cutting the belly.
Fig.4f. Top view of the area for cutting the belly.
Fig. 4g. Cross-section 1 - 1 of Fig.4f.
Fig.5. Enlarged representation of the proposed device front view.

### Detailed description of the preferred embodiments

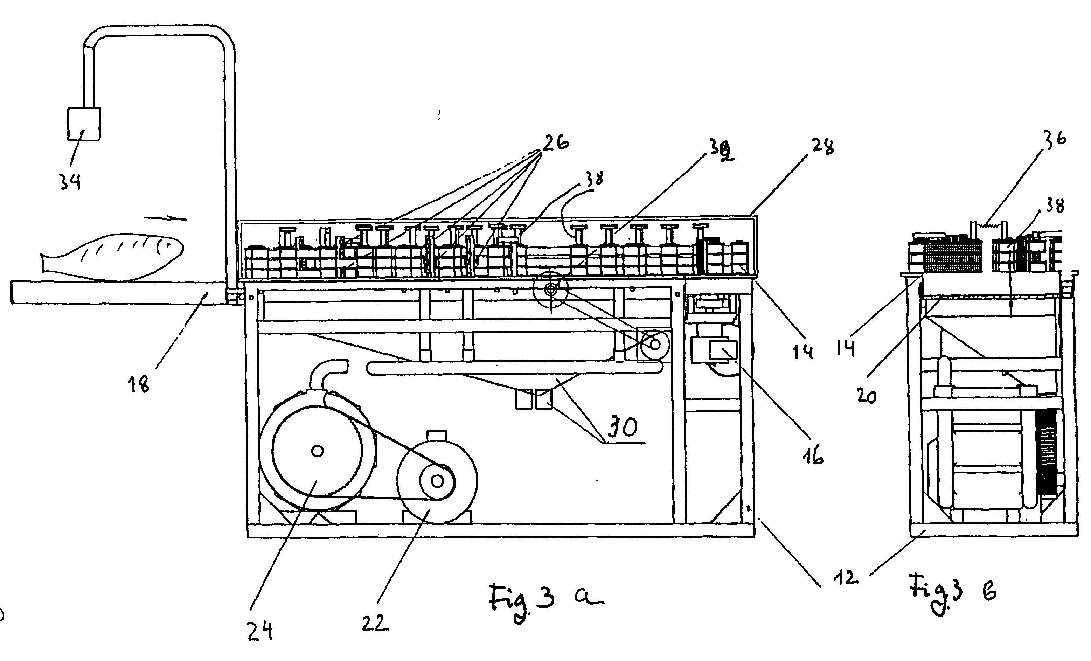

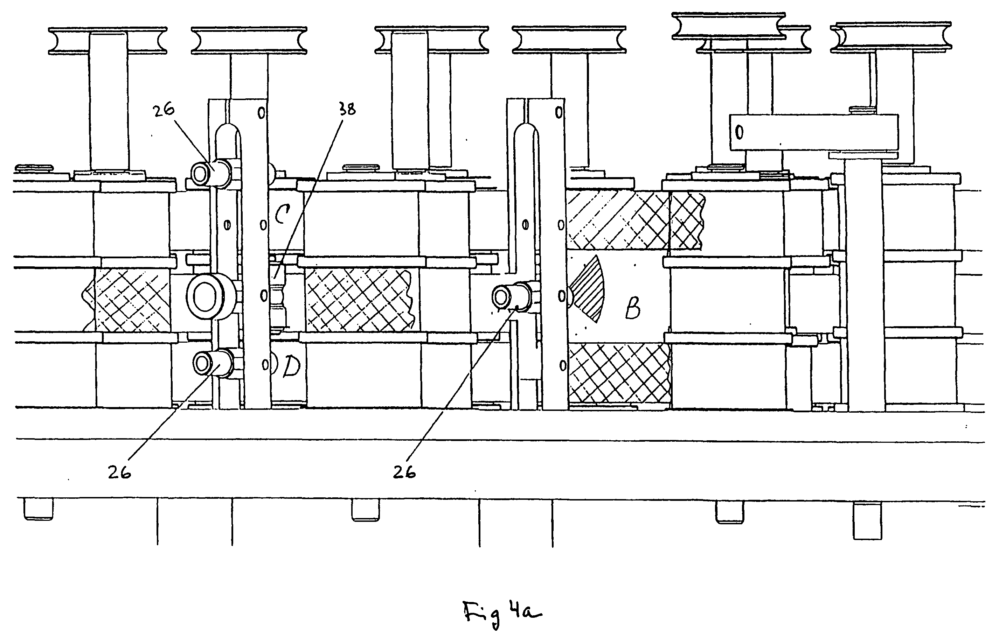

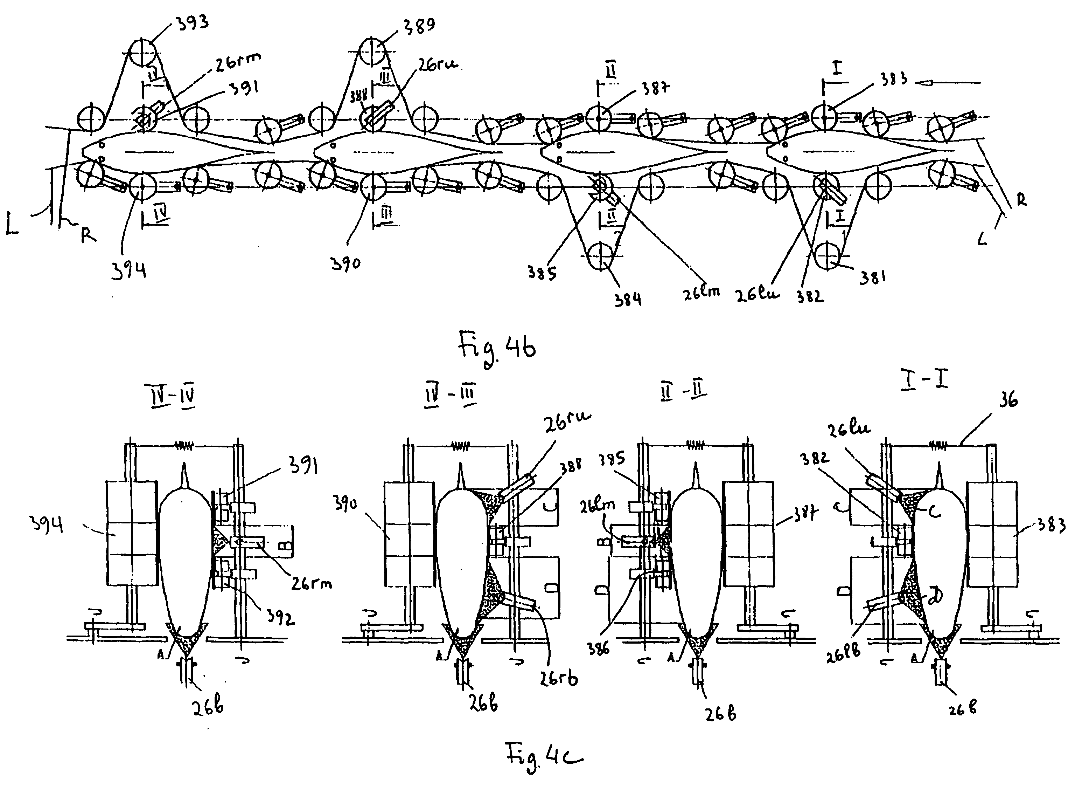

With reference to Figs.2c,3a, 3b, the proposed apparatus or machine 10 for scaling wish and removing its viscera comprises the following main components: a frame 12 on which a belt conveyer 14 with appropriate drive 16, is mounted, a receiving tray 18 with a bottom 20, a drive 22 of high pressure pump 24 creating water jets, which are delivered through nozzles 26, a machine cover 28, appropriate piping system 30 for drainage and removal of wastes, a cutting means 32 for cutting the fish belly to enable entrails removal, a console with control system 34 for operating the machine, a spring means 36 for maintaining required distance between guiding rollers 38 of the belt conveyor. The machine operates in the following way: the fish is manually (or from an automatic loader) fed on the receiving tray. The fish is supplied is succession, one by one. As best seen in Fig.1 the fish is positioned vertically on the bottom of the receiving tray, i.e. its belly facing downwards and its head forward. The fish is advanced by conveyor along the upper plane of the machine frame. This plane will be referred to further as a treatment path and its level is designated in Figs.1,2 by numeral A. This level is the same as of the bottom of the receiving tray.

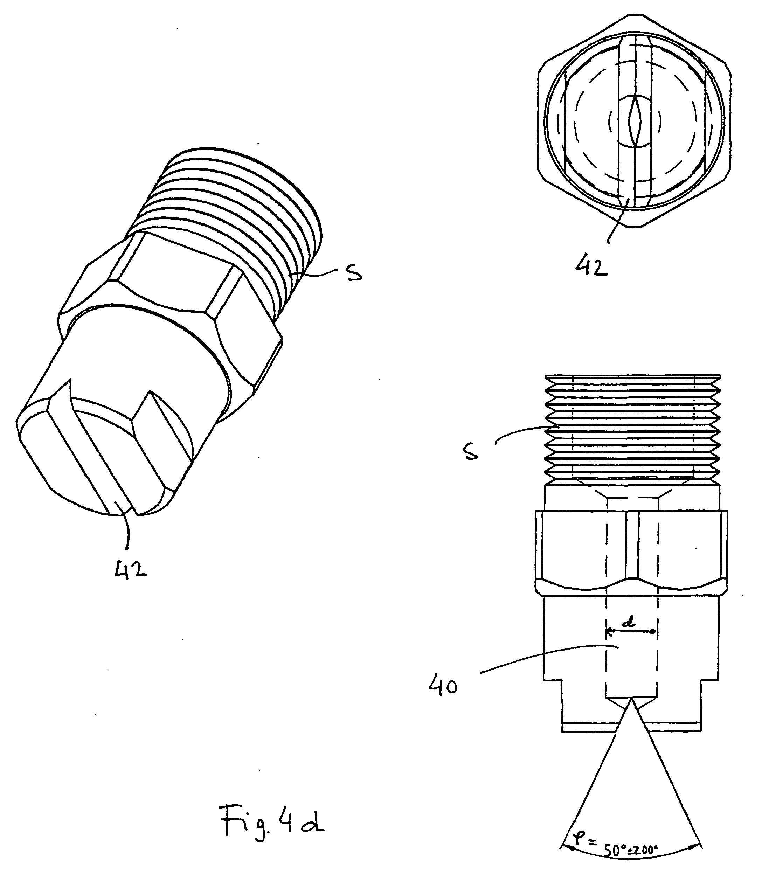

Belts of conveyer 14, which is driven by drive 16, transport the fish. High-pressure pump 24 is driven by drive 22 to provide for high pressure of about 14-16 bars, sufficient to supply water jets through nozzles 26 mounted in various areas along the treatment path. Cover 28 provides for reliable protection of an operator from splashing and piping system 30 allows removing waste materials from the treatment path. The belts of the conveyer are arranged at both sides of the fish to support the fish laterally, the belts are arranged to touch the fish body substantially in the upper part thereof, since the tissues in this part are relatively hard. With reference to Fig.4a,4b it is seen that conveyor 14 comprises left branch L and right branch R. Each branch consists of three parallel belts, residing one on another. The belts are directed by plurality of guiding rollers 38, which are arranged in such a manner that only one side of the fish body is in contact with the corresponding branch, while the opposite side of the fish body is exposed to water jets, emerging from nozzles 26 and cleaning the fish from scale. The fish advances along the treatment path and water jets successively treat its lateral sides. The treatment path comprises successive discrete positions I, II, III, IV, which are shown in Fig.4b. Referring now to Figs.4a, 4c it is seen, that belts of each branch are arranged in such a manner that when the fish moves, the middle zone B is left open between upper and lower conveyor belts. This zone is exposed to water treatment by jets emerging from nozzles located at one side of the fish. From the opposite side there are left two zones exposed: C and D (the upper and lower zone).

The above mentioned can be illustrated by Figs. 4b and 4c, in which it is seen that in working position 1 the upper and lower belts of the left branch do not touch the left side of the fish body (motion-wise) since they are guided by common roller 381, located remote from the fish body. The middle belt of the left branch is guided by roller 382, which is located close to the fish to ensure that the middle belt touches left side of the fish body. Common roller 383, situated at the opposite side is located close to the fish body and all three belts touch the right side of the fish. In the free space available between the fish and the upper and lower belt of the left branch reside nozzles 26lu and 26lb, which direct high-pressure water jet correspondingly to the left top and to the left bottom zones C, D of the fish body. The left middle part of the fish body is not treated so far, since it is contact with middle belt, guided by roller 382. It can be appreciated that left side of the fish is in contact either with one or two belts of the left branch, while the opposite side is always in contact with three belts of the right branch. By virtue of this provision fish is advanced by conveyor along the treatment path. Spring means 36 keeps the distance between rollers to be sufficient for reliable frictional engagement and driving by belts of the left and right branch.

Having passed working position I, the fish advances to position II, in which the middle belt of the left branch is directed by roller 384 to be remote from the fish body, thus providing room for a left middle nozzle 261m. The height of this room defines left middle zone B, which is available between upper and lower belts, guided by upper and lower rollers 385,386. Nozzle 261m directs high-pressure water jet to the left middle zone B, which has not been treated yet. Three belts of the right branch touch the right side of the fish by virtue of common roller 387, situated proximate to the fish body.

After completing the treatment of the left side, the fish proceeds to working position III, in which its right side is treated. Upper right zone C and lower right zone D are treated first by water jets, emerging respectively from nozzles 26ru, 26rb. The middle zone B is in contact with the belt of the right branch, directed by roller 388. The upper and lower belts of the right branch are directed by common roller 389 to be remote from the right side. The opposite side of the fish is in contact with the all three belts of the right branch, directed by common roller 390. After completing the treatment in position III the fish proceeds further to working position IV, where the right middle section B of the fish body is treated by water jet emerging from the right middle nozzle 26rm. The upper and lower zones C, D are in contact with the upper and lower belt of the right branch.

Corresponding guiding rollers direct these belts. The middle belt of the right branch is kept remote from the right side of the fish by virtue of guiding roller 393. The left side of the fish is in contact with the all three belts of the left branch guided by a common roller 394.

Thus the sequence of treatment of the right side is the same as of the left side due to similar design of the right branch and due to similar construction and location of rollers and nozzles. While the fish advances from position I to IV, water jets are also directed to the lower part of the fish body. The jets emerge from dedicated bottom nozzles 26b arranged along the treatment path under each working position.

The fish is moving along the treatment path uninterruptedly, one after another, and since all the nozzles operate simultaneously several fish are cleaned at a time.

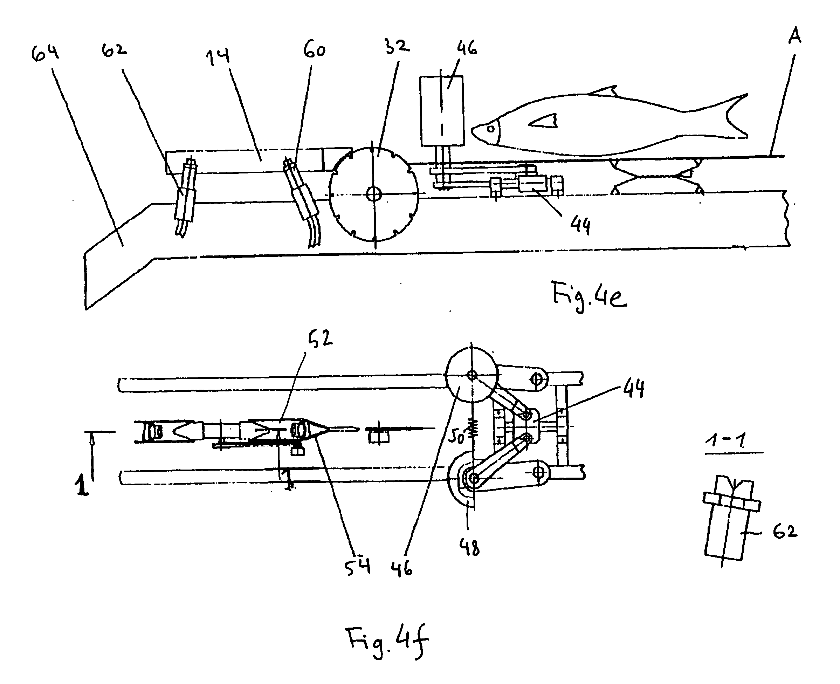

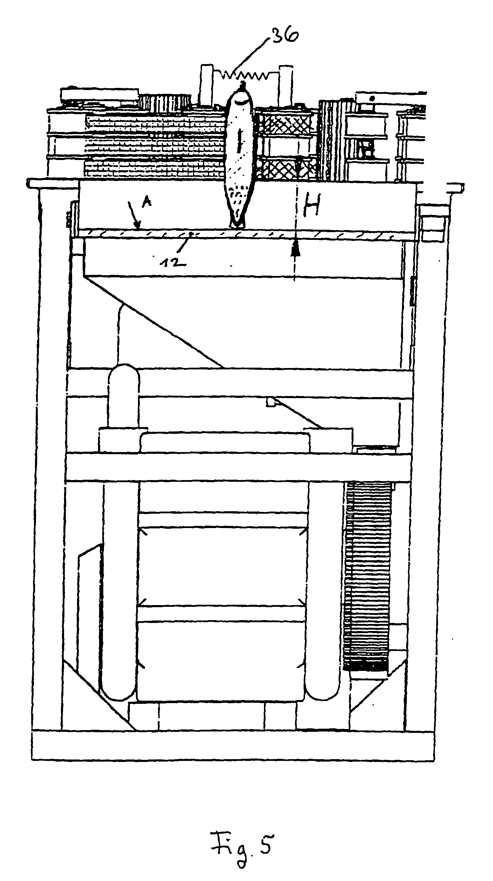

In Fig.5 it is shown how fish is advanced along the treatment path being driven by three conveyor belts at the left side and by two conveyor belts at the right side. The treatment area is above level A of the treatment path and is separated therefrom by a distance H. This distance is selected to ensure, that irrespective of the fish size H2, shown in Fig.1 the belly area would never be compressed laterally between opposite belts. The lower part of the fish body is exposed to water jets emerging from the bottom nozzles (not shown). By virtue of this provision the belly area is carefully washed around by water. Furthermore, by virtue of the above explained positioning it is ensured that the belts compress only hard tissues of the fish body.

Spring means 36 is selected to provide for lateral compression force, which is required to ensure reliable frictional engagement and transporting the fish by belts, without however puncturing the tissues. In practice the spring means should be suitable to exert lateral compression force of 2 kg on either side.

Now, referring to Fig.4d we are going to explain construction of nozzles employed in the present invention. Each nozzle is configured as cylindrical bushing, provided with an orifice 40 having diameter d. The rear end of the nozzle is provided with a screwed portion S and the forward end is formed with a diametrical groove 42, having V-shaped cross-sectional configuration. The groove angle ϕ and diameter d of the orifice are chosen in such a manner that water jet, emerging from the nozzle would provide a reliable scaling. In practice, for water jet supplied under 14-16 bar pressure diameter d is 3 mm and angle ϕ is 50±2 deg.

By virtue of this provision it is possible to deliver a flat fan-shaped jet, which is very efficient for removing the scales. It is advantageous to dispose the nozzles in working positions in such a way, that adjacent nozzles deliver overlapping water jets and thus to ensure better scaling. The optimal distance between the nozzles and the fish surface is established empirically. This distance is kept constant irrespective of the fish thickness by proper positioning the guiding rollers.

Having passed scaling, the fish by means of the same conveyer is transported along the treatment path to the position for the removal of internal organs. As seen in Figs.4e, 4f this position is provided with rotating cutting disc 32 for cutting the fish belly. Residing in the beginning of this position a lever mechanism 44 is provided. This mechanism aligns the fish with the cutting disc by virtue of dedicated rollers 46,48, mounted on respective levers and connected therebetween by a spring means 50.

As seen in Fig.2b the lever mechanism keeps the distance B between rollers and the disc constant and thus ensures that the fish gripped between rollers is always cut along its middle plane, coinciding with the plane of the cutting disc.

Referring to Fig.2a it is seen that cutting disc protrudes above level A of the treatment path by a distance h to ensure that the cut is sufficiently deep and provides for easy removal of viscera. Furthermore, the alignment ensures that the fish is cut through its anus and thus removal of viscera is even more facilitated, since the major part of the viscera is held up in the anus. Conveyor advances the cut fish further to cleaning position, which is located beyond the disc. In this position an expanding means 52 is provided, which has conical end 54 facing the fish and forcing the belly walls apart. Mounted beneath the cleaning position nozzles 60,62 are provided, which supply water for cleaning the belly and outwashing the entrails. It is advantageous if the nozzles are directed to the fish belly at a small inclination, facing one another. The entrails and dirty water are easily evacuated from the cut belly by gravitation. The clean fish is evacuated from the apparatus via discharge tray 64.

By virtue of the above described method and apparatus a very high quality of fish scaling is ensured combined with complete cleaning of the fish from viscera.

It should be understood that the present invention should not be limited to the above described example and embodiments. One ordinarily skilled in the art can make changes and modifications without deviation from the scope of the invention.

The scope of the present invention is defined in the appended claims.

However it should be understood that the features disclosed in the foregoing description, in the following claims and/or accompanying examples may separately and in any combination thereof, be material for realizing the present invention in diverse forms thereof.

## Claims

1. A method for scaling fish and removing its internal organs, in which the fish is advanced in a longitudinal direction along a treatment path while the fish body is exposed to water jets, said method comprising
a) positioning the fish on a reference plane while the longitudinal middle plane of the fish body being perpendicular to the reference plane, with its belly being downwards and its head forward,
b) applying lateral forces strictly to the upper part of the fish body to enable holding and advancing the fish along the treatment path without touching the belly area.

2. The method as defined in claim 1, comprising successive advancement the fish from scaling position to position for removing internal organs.

3. The method as defined in claim 2, comprising cutting the belly area in the position for removing internal organs.

4. The method of claim 1, comprising exposing the opposite lateral sides of the fish body to high-pressure water jets.

5. The method as defined in claim 3, comprising exposing the belly area to water jets.

6. The method of claim 3, comprising forcing the belly walls apart to facilitate evacuation of internal organs.

7. A device for fish scaling and cleaning its internal organs by means of high pressure water jets, said device comprising
a) A supporting frame suitable for mounting various components of the device, said frame defines a treatment path, along which the fish proceeds from scaling position to position for removing internal organs
b) a transporting means, suitable for advancing the fish along the treatment path, wherein the fish is positioned during transportation on a reference plane with its belly area downwards, said transporting means comprises endless conveyor, consisting of two opposite branches, arranged at lateral sides of the treatment path to transport the fish along the treatment path, said conveyor being adapted for applying forces strictly to the upper part of the fish body without touching the belly area
c) a water jet delivery means, suitable for producing high-pressure water jets and directing the jets to the fish body
d) a cutting means suitable for cutting the belly area to enable evacuation internal organs therefrom.

8. The device as defined in claim 7, in which each of the branches comprises three parallel belts, directed by corresponding guiding rollers, said rollers are located in such a manner that one lateral side of the fish body is always in frictional engagement either with one or with two belts of the one branch, while the opposite lateral side of the fish body is in frictional engagement with all three belts of the opposite branch and there is provided a room between the fish body and those belts, which are not in frictional engagement with the fish body, said room is sufficient for deployment therein of at least one nozzle for directing high-pressure water jet to the corresponding lateral side of the fish body.

9. The device as defined in claim 8, comprising a spring means for maintaining constant distance between the opposite belts, said spring means is sufficient to exert lateral force on each fish side, said force is sufficient for frictional engagement and reliable advancing the fish along the treatment path without however damaging the fish body tissues.

10. The device as defined in claim 7, in which nozzles are configured to provide jet discharge in the form of flat fan-shaped flow.

## Patentansprüche

1. Verfahren zum Abschuppen von Fisch und zum Entfernen seiner inneren Organe, bei welchem der Fisch in einer Längsrichtung entlang eines Behandlungsweges befördert wird, während der Fischkörper Wasserstrahlen ausgesetzt wird, wobei das Verfahren umfaßt
a) Positionieren des Fisches auf einer Bezugsfläche, während die Längsmittelebene des Fischkörpers senkrecht zu der Bezugsfläche ist, wobei sein Bauch nach unten und sein Kopf nach vorne zeigt,
b) Beaufschlagen seitlicher Kräfte streng auf den oberen Teil des Fischkörpers, um ein Halten und Befördern des Fisches entlang des Behandlungsweges ohne Berühren des Bauchbereichs zu ermöglichen.

2. Verfahren nach Anspruch 1, umfassend eine fortlaufende Beförderung des Fisches von der Abschuppposition zur Position zum Entfernen von inneren Organen.

3. Verfahren nach Anspruch 2, umfassend ein Aufschneiden des Bauchbereichs in der Position zum Entfernen von inneren Organen.

4. Verfahren nach Anspruch 1, umfassend ein Aussetzen der gegenüberliegenden Seitenflanken des Fischkörpers gegenüber Hochdruckwasserstrahlen.

5. Verfahren nach Anspruch 3, umfassend ein Aussetzen des Bauchbereichs gegenüber Wasserstrahlen.

6. Verfahren nach Anspruch 3, umfassend ein Spreizen der Bauchwände, um eine Entleerung von inneren Organen zu ermöglichen.

7. Vorrichtung zum Abschuppen von Fisch und zum Reinigen seiner inneren Organe mittels Hochdruckwasserstrahlen, wobei die Vorrichtung umfaßt:
a) einen Stützrahmen, der zum Montieren verschiedener Komponenten der Vorrichtung geeignet ist, wobei der Rahmen einen Behandlungsweg definiert, entlang welchem der Fisch von einer Abschuppposition zur Position zum Entfernen von inneren Organen fortschreitet,
b) ein Transportmittel, das zum Befördern des Fisches entlang des Behandlungsweges geeignet ist, wobei der Fisch während des Transports auf einer Bezugsfläche mit seinem Bauchbereich nach unten zeigend bereitgestellt ist, wobei das Transportmittel ein Endlosfördermittel bestehend aus zwei gegenüberliegenden Abschnitten, angeordnet an Seitenflanken des Behandlungsweges, um den Fisch entlang des Behandlungsweges zu transportieren, umfaßt, wobei das Fördermittel angepaßt ist, um Kräfte streng auf den oberen Teil des Fischkörpers ohne Berühren des Bauchbereichs zu beaufschlagen,
c) ein Wasserstrahlliefermittel, das zum Erzeugen von Hochdruckwasserstrahlen und zum Richten der Strahlen auf den Fischkörper geeignet ist,
d) ein Schneidmittel, das zum Aufschneiden des Bauchbereichs geeignet ist, um eine Entleerung innerer Organe aus diesem zu ermöglichen.

8. Vorrichtung nach Anspruch 7, bei welcher jede der Abschnitten drei parallele Gurte umfaßt, die durch entsprechende Führungsrollen gelenkt werden, wobei die Rollen auf eine solche Weise angeordnet sind, daß eine seitliche Flanke des Fischkörpers immer in Reibungseingriff entweder mit einem oder mit zwei Gurten des einen Abschnitts ist, während die gegenüberliegende seitliche Flanke des Fischkörpers in Reibungseingriff mit allen drei Gurten des gegenüberliegenden Abschnitts ist, und wobei ein Raum zwischen dem Fischkörper und solchen Gurten bereitgestellt ist, die nicht in Reibungseingriff mit dem Fischkörper sind, wobei der Raum ausreichend ist zum Einsatz darin wenigstens einer Düse zum Richten eines Hochdruckwasserstrahls auf die korrespondierende seitliche Flanke des Fischkörpers.

9. Vorrichtung nach Anspruch 8, umfassend ein Federmittel zum Bewahren eines konstanten Abstands zwischen den gegenüberliegenden Gurten, wobei das Federmittel ausreichend ist, um seitliche Kraft auf jede Fischseite auszuüben, wobei die Kraft ausreichend ist für einen Reibungseingriff und ein verläßliches Befördern des Fisches entlang des Behandlungsweges, ohne jedoch die Fischkörpergewebe zu beschädigen.

10. Vorrichtung nach Anspruch 7, bei welcher Düsen konfiguriert sind, um eine Strahlenabgabe in der Form eines flachen fächerförmigen Flusses bereitzustellen.

## Revendications

1. Procédé pour écailler un poisson et pour le vider de ses organes internes, dans lequel on fait avancer le poisson dans une direction longitudinale le long d'un trajet de traitement alors que le corps du poisson est exposé à des jets d'eau, ledit procédé comprenant les étapes consistant à
a) positionner le poisson sur un plan de référence alors que le plan médian longitudinal du corps du poisson est perpendiculaire au plan de référence, son abdomen étant tourné vers le bas et sa tête étant tournée vers l'avant, et
b) appliquer des forces latérales strictement sur la partie supérieure du corps du poisson pour permettre de maintenir et de faire avancer le poisson le long du trajet de traitement, sans toucher la zone de l'abdomen.

2. Procédé selon la revendication 1, comprenant l'étape consistant à faire avancer successivement le poisson depuis la position d'écaillage à la position pour vider les organes internes.

3. Procédé selon la revendication 2, comprenant l'étape consistant à couper la zone de l'abdomen dans la position pour vider les organes internes.

4. Procédé selon la revendication 1, comprenant l'étape consistant à exposer les côtés latéraux opposés du corps du poisson à des jets d'eau sous haute pression.

5. Procédé selon la revendication 3, comprenant l'étape consistant à exposer la zone de l'abdomen à des jets d'eau.

6. Procédé selon la revendication 3, comprenant l'étape consistant à forcer les parois de l'abdomen en écartement pour faciliter l'évacuation des organes internes.

7. Dispositif pour écailler un poisson et pour le vider de ses organes internes au moyen de jets d'eau sous haute pression, ledit dispositif comprenant :
a) un cadre de support approprié pour monter divers composants du dispositif, ledit cadre définissant un trajet de traitement, le long duquel le poisson progresse depuis la position d'écaillage à la position pour vider les organes internes ;
b) un moyen de transport, approprié pour faire avancer le poisson le long du trajet de traitement, dans lequel le poisson est positionné pendant le transport sur un plan de référence avec la zone de son abdomen tournée vers le bas, ledit moyen de transport comprenant un convoyeur sans fin, constitué de deux branches opposées agencées sur des côtés latéraux du trajet de traitement pour transporter le poisson le long du trajet de traitement, ledit convoyeur étant adapté à appliquer des forces strictement sur la partie supérieure du corps du poisson sans toucher la zone de l'abdomen ;
c) des moyens de fourniture de jets d'eau, adaptés à produire des jets d'eau sous haute pression et à diriger les jets vers le corps du poisson ; et
d) des moyens de coupe appropriés pour couper la zone de l'abdomen pour permettre l'évacuation des organes internes hors de celui-ci.

8. Dispositif selon la revendication 7, dans lequel chacune des branches comprend trois courroies parallèles, dirigées par des rouleaux de guidage correspondants, lesdits rouleaux étant situés de telle manière qu'un côté latéral du corps du poisson est toujours en engagement de friction soit avec une courroie soit avec deux courroies de l'une des branches, alors que le côté latéral opposé du corps du poisson est en engagement de friction avec toutes les trois courroies de la branche opposée, et il existe un espace entre le corps du poisson et celles des courroies qui ne sont pas en engagement de friction avec le corps du poisson, ledit espace étant suffisant pour le déploiement à l'intérieur de celui-ci d'au moins une buse pour diriger un jet d'eau sous haute pression vers le côté latéral correspondant du corps du poisson.

9. Dispositif selon la revendication 8, comprenant un moyen à ressort pour maintenir une distance constante entre les courroies opposées, ledit moyen à ressort étant suffisant pour exercer une force latérale sur chaque côté du poisson, ladite force étant suffisante pour engager en friction et pour faire avancer de façon fiable le poisson le long du trajet de traitement sans toutefois endommager les tissus du corps du poisson.

10. Dispositif selon la revendication 7, dans lequel des buses sont configurées pour assurer la décharge d'un jet sous la forme d'un écoulement aplati en éventail.
